# EUROPEAN PATENT APPLICATION

(11) **EP 3 566 969 A1**
(43) Date of publication of application: **13.11.2019**
(21) Application number: 18171272.0
(22) Date of filing: 08.05.2018
(51) Int. Cl.: B65D 25/10, B23P 19/00, F16B 11/00

(54) **SYSTEM FOR STORING A PLURALITY OF ADHESIVE STUDS, STUD ARRANGEMENT, METHOD FOR CONVEYING ADHESIVE STUDS AND CONVEYOR EQUIPMENT**

(71) Applicant: Newfrey LLC, New Britain, CT 06053 (US)
(72) Inventor: Briel, Karl-Heinz, 35394 Gießen (DE); Gramsch-Kempkes, Sascha, 35394 Gießen (DE); Hofmann, Alexander, 35394 Gießen (DE); Kurz, Roland, 35394 Gießen (DE); Linke, Matthias, 35394 Gießen (DE); Szurma, Georg, 35394 Gießen (DE)
(74) Representative: SBD IPAdmin

(57) **Abstract**

Method for conveying adhesive studs, stud arrangement and system for storing a plurality of adhesive studs (14), the system comprising a support, said support having:
- a base sensibly extending in a base plane;
- a plurality of apertures, each aperture being delimited by a lateral wall upstanding at least partially from the base, wherein each aperture is identical and has a cylindrical shape adapted to receive the shank of an adhesive stud;
wherein the lateral wall is deformable between a first position and a second position, wherein in the first position the lateral wall is adapted to clamp the shank of the stud and in the second position the lateral wall is adapted to release the shank of the stud.

## Description

The present invention is directed to a system for storing adhesive studs, to a stud arrangement, to a method for conveying adhesive studs and to a conveyor equipment.

It is known, for example, in the technical field of joining fasteners to workpieces to weld metallic bolts to metallic workpieces. This method, known as "stud welding", is used, in particular, in the automotive industry in order to weld bolts to car body panels, wherein fixing clips made of plastic are fixed to connect to the bolts, to which fixing clips cables, wires etc. are fixed.

Due to the fact that composite materials that are able to be welded less well or are non-metallic are being increasingly used, for example, in car body construction, such as plastics, fibre composite components, etc., the adhesive bonding technique (also called gluing technique or adhering technique) has been established as a joining method in car body panel construction in particular. Instead of welding the bolts to workpieces, they are adhesively bonded (or glued) to the workpiece.

Document DE102014118973 discloses a fastener having a joining face which has an application region. A joining material (or an adhesive) at least partially covers the application region. The adhesive is generally applied in a heated state and is then cooled down again. The fastener produced in this way is then transported with the adhesive, for example from a place of production to a place where the fastener is to be adhered or bonded or glued to a support face of a workpiece, such as a car body panel, for example.

During storage and transportation, it is important that the adhesive holds its placement and does not flow or slip from the flange of the stud for instance. It is also important that the adhesive is not activated during transport or storage.

The adhesive studs are nowadays stored in a bulk and in order to avoid these unwanted effects, a cooling chain is used. For example, the fasteners are stored and transported in cool boxes. More particularly, the fastener is stored in a frozen state and also transported in a refrigerated state in order to ensure a storage period that lasts several months.

Using cooling chains is particularly complicated and expensive. Monitoring the temperature may be necessary and there is a risk of the cooling chain breaking during storage and/or transportation.

Therefore the need still remains to provide a system for storing and transporting the adhesive studs in a safe way in order for the adhesive studs to be used directly without delay when arriving on the assembly or fastening line.

It is hence an object of the present invention to at least alleviate the aforementioned shortcomings. More particularly one objective of the present invention is to provide a system for storing a plurality of adhesive studs which is easy to manufacture, which allows a secure holding of the stud and which limits the risk of interference between the adhesive and any other element. Besides, this is also an objective of the present invention to provide an arrangement being easy to handle for the storing and for the feeding of the adhesive studs.

To this aim, according to the invention, it is provided a system for storing a plurality of adhesive studs, each having a shank and a flange, the system comprising a support, said support having:
- a base sensibly extending in a plane;
- a plurality of apertures, each aperture being delimited by a lateral wall, upstanding at least partially from the base, wherein each aperture is identical and has a cylindrical shape adapted to receive the shank of the stud;
wherein the lateral wall is deformable between a first position, in which the lateral wall is adapted to clamp the shank of the stud and a second position, in which the lateral wall is adapted to release the shank of the stud.

Thus, the adhesive studs can be held straight preventing the adhesive to slip from the flange. Such system allows to store and/or transport a plurality of adhesive studs without the need of maintaining a cooling chain. The two positions (released position and clamped position) enable the system to be directly used after the storage or transport as a magazine. The studs can be taken from the system directly to a stud holder or to an intermediate magazine. This reduces the manufacturing and assembly time and process.

According to an embodiment, the lateral wall comprises an end portion, and the end portion is a supporting portion adapted to support the flange of a stud. Thus, the system allows to support the studs and the flange of the studs.

According to an embodiment, the support is made of a thermoformed foil. The thermoformed foil may be easily formed and deformed, can be adapted to the shape of the studs. The support is thus easy to manufacture and remain light for transport.

According to an embodiment, the lateral wall comprises a U-shaped cross-section with a first wing, a second wing and an intermediate section extending between the first and second wings, wherein the intermediate section forms the end portion, wherein the second wing comprises an inner surface facing the aperture and adapted to be in contact with the shank of the stud, and wherein the base extends from the first wing. The first and second wings are easy to implement and provide the needed displacement to release or clamp the shank of the studs.

According to an embodiment, a gap is arranged between the first wing and the second wing. The gap allows an easy deformation of the lateral walls from the first to the second position when needed without impacting the others apertures in the support.

According to an embodiment, the system comprises a reinforcing element, the reinforcing element being more rigid than the support. Thus the system has two independent parts, which can cooperate with each other. If needed, the reinforcing element can be removed or kept.

According to an embodiment, the reinforcing element comprises a plurality of projections adapted to support the plurality of apertures, wherein the projections are arranged in the gaps between the first and second wings. The reinforcing element and the support easily cooperate with each other.

According to an embodiment, the system further comprises a lid adapted to be sealed to the support. The lid is able to sealingly close the support or system comprising a plurality of adhesive studs. The lid is easy to implement.

The present invention is further directed to a stud arrangement comprising a plurality of studs, each having a shank and a flange and a system as described above, wherein the shanks extend in the apertures, and wherein the flanges each have a bottom side and a top side, wherein the bottom side of the flanges is arranged facing the support. Such arrangement can be easily transported or stored. The adhesive studs are well preserved within the system.

The present invention is also directed to a method for conveying adhesive studs from a storing position to a used position comprising the steps of:
- providing a stud arrangement as previously disclosed, wherein the lateral walls are in the first position, such that the shank of the studs are clamped, and wherein the system is provided with the support and a reinforcing element comprising a plurality of projections, the support and the reinforcing element being arranged such that both support and reinforcing element cooperate with each other;
- providing a conveyor equipment comprising a hose and a nozzle adapted to receive the stud;
- arranging the nozzle around an aperture of the stud arrangement, such that the nozzle surrounds the flange of a stud and deforms the lateral walls from the first to the second position by pushing the support against the reinforcement element;
- vacuuming and conveying the stud through the nozzle and the hose from the support to a fastening equipment.

Such method is easy to implement, allows the adhesive studs to be quickly released from the support and quickly used when needed for their assembly to a panel for example.

According to an embodiment, the conveyor equipment comprises a stud departure sensor, and the method further comprises a step of detecting the presence of the stud in the hose. The sensor allows to automatize the method and top control for instance the pressure in the airflow channels.

According to an embodiment, a first airflow channel projects compressed air for feeding the adhesive stud through the hose, and wherein an air flow enhancer setup is provided such that a vacuum is generated for increasing the sucking effect of the adhesive stud into the hose. The air flow enhancer setup with a vacuum conveyor is for example based on the Coanda effect. Compressed air flows through the hose while the Coanda effect generates a vacuum at the opposed side of this component leading to air flowing from outside the nozzle into the hose.

In a possible embodiment, a first air flow channel projects compressed air toward the bottom side of the flange. The projection toward the bottom side increase the released forces and allow to ensure a correct release of the adhesive stud from the support.

According to an embodiment, a variable valve is provided, and the airflow pressure is changed from a first pressure to a second pressure when the stud departure sensor detects an adhesive stud in the hose.

Finally, the invention is directed to a conveyor equipment for performing the method above mentioned, comprising a hose and a nozzle adapted to receive a stud. The conveyor equipment cooperate directly with the system and enable to perform the method.

According to an embodiment, a stud departure sensor is arranged in the nozzle and/or at an extremity of the hose. The presence of the stud departure sensor allows to control the presence of the stud and more particularly that the vacuum was well operated.

According to an embodiment, the conveyor equipment comprises an air flow enhancer setup.

According to an embodiment, the conveyor further comprises a compressed air control adapted to adjust air pressure for transporting the adhesive stud through the hose and adapted to adjust vacuum intensity for vacuuming the stud inside the hose. Once the sensor detects a stud, the airflow channels can be independently controlled and their pressure accordingly adapted. For instance a variable valve may be provided to project compressed air at different pressure, a first pressure being used to suck the adhesive stud from the system, for example using the coanda effect or creating an indraft or indraught.

Other characteristics and advantages of the invention will readily appear from the following description of embodiments, provided as non-limitative examples, in reference to the accompanying drawings.

In the drawings:
Fig. 1 schematically shows a cross section view of a support for a system according to the invention, the support being provided with a plurality of apertures adapted to clamp or release the shanks of adhesive studs;
Fig. 2 shows the support of Fig. 1 which cooperates with a reinforcing element;
Fig. 3 shows the support of Fig. 1 being sealed with a lid;
Fig. 4 shows an adhesive stud being clamped in the system of Fig. 2;
Fig. 5 shows the adhesive stud being released from the support of Fig. 1 with a conveyor equipment according to a first embodiment;
Fig. 6 shows the adhesive stud being released from the support of Fig. 1 with a conveyor equipment according to a second embodiment.

On the different figures, the same reference signs designate identical or similar elements.

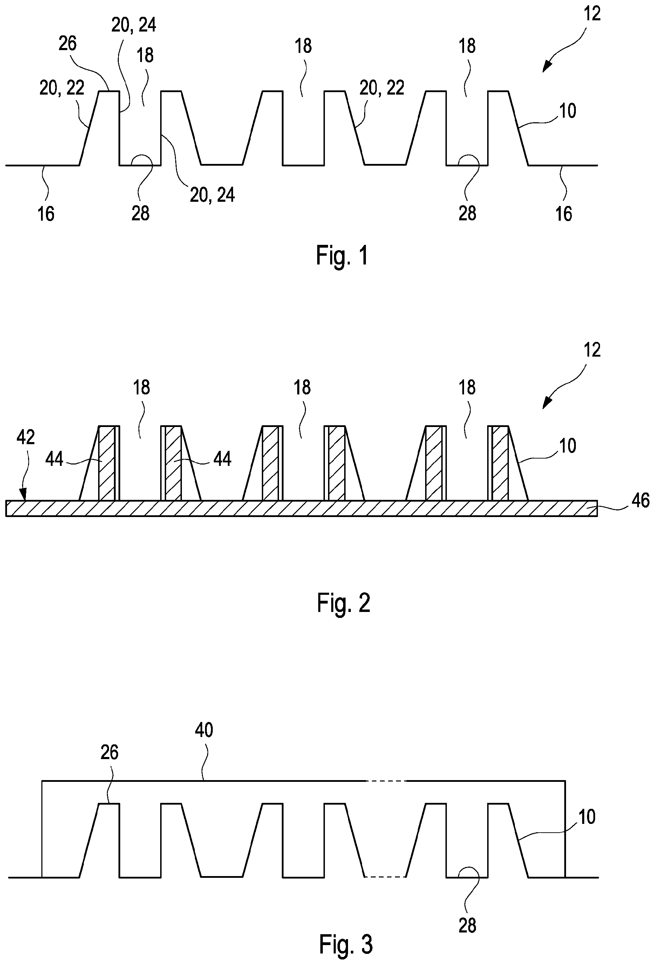

Fig. 1 shows a support 10 of a system 12 for storing and/or transporting a plurality of adhesive studs 14. The support is made of a thermoformed foil. The support 10 can have a square shape, but other shapes like band-shape or circular shape may be considered. Thus the support 10 may have the shape of a tray or a belt. The support 10 comprises a base 16 extending sensibly in a base plane. The support 10 further comprises a plurality of apertures 18.

The apertures 18 are delimited each by a lateral wall 20 upstanding from the base 16. The lateral walls are formed by the thermoplastic foil. The lateral wall 20 of each aperture 18 forms a surrounding wall structure. The lateral wall 20 comprises a U-shaped cross section with a first wing 22 extending from the base 16, a second wing 24 facing the aperture 18 and an intermediate section 26 extending between the first wing and the second wing. The intermediate section 26 may for instance extend sensibly parallel to the base 16. The aperture 18 is for instance a blind hole and comprises a bottom 28 formed by the thermoplastic foil. More particularly, the bottom 28 extends from the second wing. The bottom may be at the same level (in other words, may extend in the same base plane) than the base 16 or not. A gap 30 is provided between the first wing 22 and the second wing 24. More particularly, the gap 30 extends between a section of the base 16 and the bottom 28 of the aperture.

Each aperture 18 is adapted to receive an adhesive stud 14.

An adhesive stud 14 comprises a joining component 32 and a joining material 34 pre-applied to the joining component. The joining component 32 has a flange 36 and a shank 38. For instance the joining component is formed to be one piece. The shank forms an anchor section. The shank extends longitudinally along a longitudinal axis between a first end and a second end. The shank may be provided with a circular cross-section, substantially constant over its length. In other embodiments, the anchor section could also have a rectangular, triangular ... cross-section. Similarly, in other embodiments, the base body could not be constant over its length. The first end of the shank is for instance a free end.

The flange 36 extends from the second end of the shank. The flange 36 has a first surface facing the shank and a second surface opposite the first surface. The joining component has a joining face provided on the flange, and more particularly provided on the second surface. The joining face comprises an application section. The application section is suitable for receiving a joining material 34. The application section is covered by a joining material. The joining material is, for example, an adhesive 34 which is applied to the application section (or to the joining face). The joining material can be an adhesive drop or a circular adhesive strand, but other shapes can also be provided.

Each aperture 18 is adapted to receive the shank of the adhesive stud between a first position, in which the lateral wall clamps the shank of the stud and a second position, in which the shank of the stud can be freely released from the aperture. The second wing comprises an inner surface facing the aperture and adapted to be in contact with the shank of the stud, notably in the first position. More particularly, the lateral wall 20 can be retracted and clamp the shank, such that the adhesive stud is retained in the support.

The intermediate section may act as a supporting portion for the flange. More particularly, in the first position, the lower surface of the flange (for instance a portion of the first surface of the flange) rests against the supporting portion (the intermediate section).

The support 10 is adapted to receive a plurality of adhesive studs as described above.

For the transport or storage of the plurality of adhesive studs, the support can be sealed with a lid 40, as depicted in Fig. 3. The lid 40 may be a thermoformed foil independent from the support and then sealed to the support, notably at its periphery. In another embodiment, the lid and the support form one unique element. The lid 40 is movable between an open position in which the adhesive studs may be inserted in the apertures and a closed position in which the lid is sealed to the support and the plurality of studs is maintained in the closed area formed by the lid and the support. Thus, the lid protects the adhesive studs of any external unwanted element. More particularly, the lid 40 may be sealed to the support when the plurality of adhesive studs are in the first position (the shank is clamped). A vacuum may be created in order to preserve the integrity of the adhesive studs and increase the life cycle of the studs.

The system 12 further comprises a reinforcing element 42, 42'. The reinforcing element comprises projections 44, 44' or bumps or protrusions adapted to cooperate with the gaps 40. More particularly, the reinforcing element 42, 42' comprises a reinforcing base 46, 46' from which a plurality of projections or bumps projects. The reinforcing element is made of a material which is more rigid than the support in order to be able to rigidly maintain the support. The reinforcing element is for example made of metal or rigid plastic material or any material presenting a rigidity sufficient enough to hold the support 10.

The reinforcing base 46, 46' may extend in a plane which is sensibly parallel to the base plane.

The projections 44, 44' are adapted to cooperate with the gaps 30 provided in the support, such that the reinforcing element rigidly maintain the support, as seen in Fig. 2, Fig. 4, Fig. 5 or Fig. 6. More particularly, the projections may extend sensibly perpendicular from the reinforcing base 46, 46' and have a free end presenting a supporting section. The supporting section is adapted to face the intermediate portion of the lateral wall. For instance, in the first position the lower face of the intermediate portion, which faces the gap, rests against the supporting section. The projections 44, 44' are arranged in the gap between the first and the second wing. Thus, the lateral walls encompass the projections 44, 44', when the reinforcing element 42, 42' cooperates with the support 10.

The reinforcing element 42, 42' can easily be removed from the support 10. The reinforcing element 42, 42' cooperates with the support 10. For instance, a first reinforcing element 42 cooperates with the support 10during the positioning of the studs within the apertures. The first reinforcing element 42 comprises projections 44 having a circular cross section and a first diameter d1. The first reinforcing element 42 can be removed from the support 10 or continue to cooperate with the support 10 during storage or transport.

The system 12 (and notably the support 10) allows to maintain the adhesive studs separated from each other during storage or transport. Thus a matrix of studs is provided which can be easily used without any risk. The alignment of studs allows an easy automated process for handling the studs from the manufacture to the storage or the final use of the studs.

For instance, a second reinforcing element 42' cooperates with the support 10 during the feeding of the adhesive studs for their final use. The second reinforcing element 42' comprises projections 44' having a circular cross section and a second diameter d2. The second diameter d2 is greater than the first diameter. The second reinforcing element 42' cooperates with the support to allow the release of the adhesive studs clamped in the support 10. Indeed, the second diameter d2 being greater than the first diameter d1, the second reinforcing element cooperates with the support 10 such that a first force is applied to the first wing 22 of the lateral wall 20. This first force initiates the release of the adhesive stud or the movement of the lateral walls 20 from the first to the second position.

A conveyor equipment 48, 48' may be provided for conveying adhesive studs from a storing position to a used position, and more particularly from the system 12 or support 10 to a stud holder or intermediate magazine (not represented).

The conveyor equipment 48, 48' comprises for example a hose 50 and a nozzle 52. The nozzle 52 and the hose 50 cooperates together such that a stud can be transferred from the nozzle to the hose.

The nozzle 52 is adapted to be arranged around one adhesive stud 14 stored in the support. More particularly, the nozzle 52 comprises an opening adapted to surrounds the flange of the adhesive stud and the aperture. Thus the cross section of the opening is greater than the cross section of aperture. The nozzle 52 may be moved in the direction of the reinforcing base 46'.

During the motion of the nozzle 52 directed to the base 16, the nozzle 52 first contacts and then pushes the base 16 against the reinforcement element 42'. Upon contact between the reinforcement element 42' and the lateral wall 20 the first wing 22 is pushed and thus pulls the second wing 24. By pulling the second wing 24, the second wing 24 is being separated from the shank and then the shank is released. Thus, the motion of the nozzle 52 toward the base 16 allows the lateral wall 20 to be deformed from the first position to the second position, and thus the shank to be at least partly released.

More particularly, the second reinforcement element 42' has a plurality of projections 44', as described above with a diameter d2 bigger than the projections of the first reinforcement element 42. The difference in diameter allows notably a contact between the projections 44' and the lateral walls 20 such that the first wing 22 is pushed and pulls the second wing 24. By pulling the second wing 24, the second wing 24 is being separated from the shank and then the shank is released. Thus, the motion of the nozzle 52 toward the base 16 allows the lateral wall 20 to be deformed from the first position to the second position, and thus the shank to be at least partly released.

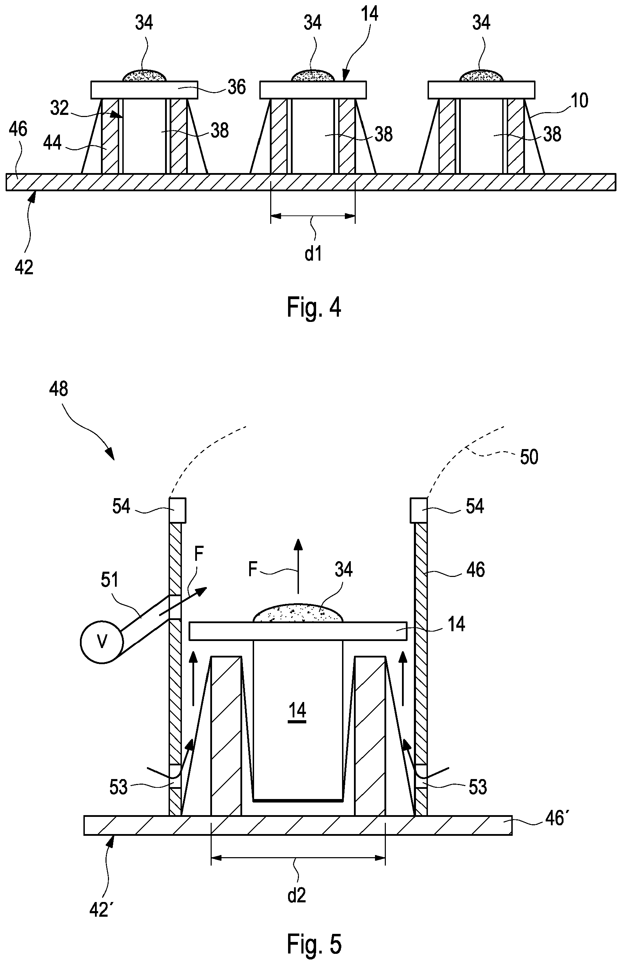

In a first embodiment, depicted in Fig. 5, the nozzle 52 comprises an inlet 51 adapted to receive compressed air for the feeding of the adhesive stud into the hose 50. The inlet may be provided with a variable valve and/or a compressed air control adapted to adjust air pressure. In the vicinity of the free end of the nozzle an aperture 53 is provided. This aperture, in the nozzle walls, allows air to flow from outside to the inside of the nozzle 52.

An air flow enhancer setup is provided such that a vacuum is generated for increasing the sucking effect of the adhesive stud into the hose. More particularly, an airflow is thus created from outside to the inside of the nozzle 52 through the aperture 53 and said airflow is directed to the bottom of the flange. This airflow from outside to the inside of the nozzle 52 through the aperture 53 is created through the air flow enhancer setup. The airflow provided by the inlet is adapted to transport the adhesive stud through the hose 50 and to adjust vacuum intensity for vacuuming the stud inside the hose using the Coanda effect with the aperture 53.

More particularly, the conveyor equipment 48 may be provided with an air amplifier (also called air flow enhancer), which is also referred to as a Coanda effect pump. The air amplifier is utilized to generate a vacuum force. More particularly, the air amplifier converts a pressurized gas (or compressed air) into a vacuum force effective for maintaining a suction action. Thus, the air flow enhancer setup injects pressurized air at the inlet 51. The inlet 51 directs the pressurized air through a channel to the inside of the nozzle. More particularly, the inlet extends according to an inlet axis which forms with a longitudinal axis an obtuse angle. The obtuse angle provides an air vacuum distribution effect that reduces internal turbulence of air. The inside shape of the nozzle creates a movement of the pressurized air. As a result of the pressurized air movement, a vacuum force is generated in the same direction as the flow of the pressurized air along the longitudinal axis and below the flange of the adhesive stud.

In another embodiment, a venturi pump may also be used.

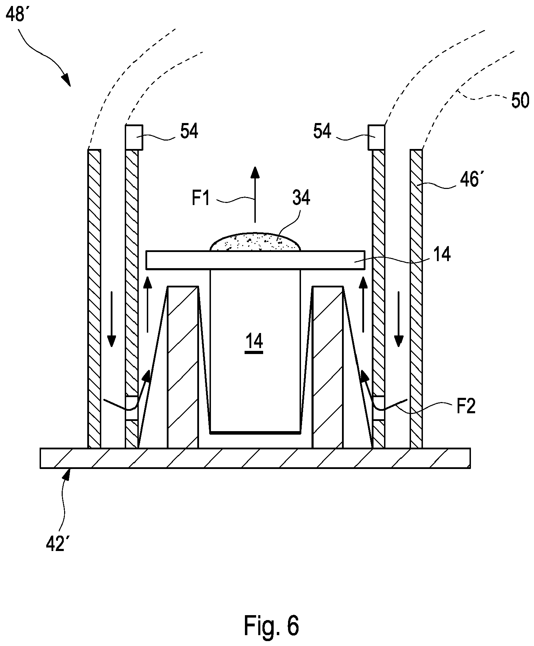

Fig. 6 shows a second possible embodiment of a conveyor equipment 48' with the nozzle having a first and a second airflow channel F1, F2.

The first air flow channel F1 is adapted to suck up the adhesive stud into the hose. The first airflow channel F1 is for instance directed sensibly along the longitudinal axis of the adhesive stud when stored in the support. To allow air to suck up the adhesive stud within the hose, a first valve is provided to control the first airflow channel and a first pressure is applied.

The second airflow channel blows air on the bottom side (also called inner or lower surface) of the flange. This second airflow channel F2 allows the adhesive stud to be easily released. Indeed, the second airflow channel applies an airflow directly on the first surface of the flange, thus providing a released force on the first surface to help "detaching" the first surface of the flange from the intermediate section or supporting portion of the support 10. A second valve is provided to control the second airflow channel F2 and a second pressure is applied.

The first and second airflow channels F1, F2 can be independently controlled. More particularly, the first and second airflow channels F1, F2 allow to increase the release forces applied to the adhesive stud.

A sensor 54 may be provided in the nozzle or at the end of the hose attached to the nozzle to detect the presence of the stud. The sensor is for instance a departure sensor.

The sensor 54 may also be used to control or open and close the first and second valve in the embodiment of Fig. 6.

For instance, in the conveyor equipment embodiment of Fig. 5, the variable valve V may be controlled according to the information sent by the sensor 54. Thus, if the sensor 54 detects an adhesive stud in the hose 50, the pressure of the airflow coming from the inlet may decrease from a first pressure to a second pressure, the first pressure being high enough to ensure an indraught through the aperture and the movement of the adhesive stud from the nozzle to the hose 50, whereas the second pressure ensure the adhesive stud moves through the hose.

The hose 50 is for example a flexible hose and adapted to receive an adhesive stud and convey said stud from a first end connected to the nozzle to a second end connected to an intermediate magazine or a stud holder or any similar component adapted to perform the joining of the adhesive stud to a workpiece.

The system 12 described above may be used to manufacture the adhesive studs and/ or to store said adhesive studs and/ or to convey or transport said studs.

The manufacture may be performed as follow.

In a first step the system 12 is provided. Joining components are arranged in the apertures 18 of the system 12. The shanks of the joining components are clamped by the lateral walls 20, for example by retraction of the lateral walls. Thus, the joining component is securely held in the system. Notably the (first) reinforcing element 42 allows a stable state of the support 10 and the shanks of the joining components are clamped by the lateral walls 20, for example by retraction of the lateral walls.

In a second step, the joining material may be provided on the flange of the joining component. The joining material is for instance an adhesive and may be arranged or projected on the application section using a template. The template is arranged on an arrangement comprising the system 12 and the joining components. Then a drop or a certain quantity of adhesive is squeegeed on the template, such that adhesive is applied only to the application section of the joining components.

Thus the adhesive studs are realized.

The system 12 with or without the first reinforcing element 42 can be sealed by a lid for storage or transport. A vacuum may be made to preserve the adhesive studs. In other embodiments, a protecting gas or dry air or air can be used. The lid is arranged at a non-zero distance from the adhesive stud such that the lid is not in contact with the adhesive stud. The air or gas creates for example a protective area above the adhesive studs, such that the adhesive material remains at a non-zero distance from any solid surface.

The system (with or without the first reinforcing element 42) may be stackable, such that several systems 12 may be arranged one above the other. For instance, eight systems might be stacked in a tray having edges or rims adapted to avoid any collision between the stud arrangements (in other words the system with the adhesive studs).

After storage and transportation, the second reinforcing element 42' may be provided shortly before the use of the system by the conveyor equipment. The second reinforcing element 42' cooperates with the support 10 such that the projections extend in the gaps and rest against the first wing of the lateral walls 20 supplied in the first position. Thus, the projections 44' extend in the gaps but collide with the lateral walls 20.

The conveyor equipment 48, 48' is then used to first surround the flange of the adhesive stud. More particularly, the nozzle first surrounds the flange of the adhesive stud and is then moved toward the base 18. During the motion of the nozzle toward the reinforcing base 46' the nozzle first contacts the support 10 and then the nozzle 52 and the second reinforcing element 42' deform the lateral wall 20 from the first position to the second position by pushing the first wing 22 which thus pull the second wing 24. The lateral wall moves from the first to the second position, allowing a release, at least partial, of the shank. More particularly, in the second position of the lateral walls 20, the adhesive stud is in a lose position.

Simultaneously or shortly after, the inlet of the conveyor equipment 48 releases a compressed air to form an airflow adapted to release completely the adhesive stud from the support 10 and to feed the adhesive stud through the hose. The complete release is notably realized with the use of the Coanda effect, as previously described.

In another embodiment, with the conveyor equipment 48' of Fig. 6, the first and/or second airflow channel are controlled to suck air above the flange and/or to blow air below the flange. The nozzle and the first and/or second airflow channel allow(s) the complete release of the adhesive stud from the support 10. The adhesive stud is finally transferred in the hose toward a used position. When the sensor detects the adhesive stud, the second valve can be switched off.

The used position may be an intermediate storage position or a final position in a stud holder for joining the adhesive stud to workpiece or any position therebetween.

## Claims

1. System (12) for storing a plurality of adhesive studs (14), each having a shank and a flange, the system comprising a support, said support having:
- a base (16) sensibly extending in a base plane;
- a plurality of apertures (18), each aperture (18) being delimited by a lateral wall (20) upstanding at least partially from the base, wherein each aperture is identical and has a cylindrical shape adapted to receive the shank of an adhesive stud;
wherein the lateral wall (20) is deformable between a first position and a second position, wherein in the first position the lateral wall (20) is adapted to clamp the shank of the stud and in the second position the lateral wall is adapted to release the shank of the stud.

2. System (12) according to claim 1, wherein the support (10) is made of a thermoformed foil, and wherein the lateral wall (20) comprises an end portion being a supporting portion adapted to support the flange of an adhesive stud.

3. System (12) according to claim 2, wherein the lateral wall (20) comprises a U-shaped cross-section with a first wing, a second wing and an intermediate section extending between the first and second wings (22, 24), wherein the intermediate section forms the end portion, wherein the second wing (24) comprises an inner surface facing the aperture (18) and adapted to be in contact with the shank of an adhesive stud, and wherein the base (16) extends from the first wing (22).

4. System (12) according to any of claims 1 to 3, wherein a gap (30) is arranged between the first wing (22) and the second wing (24).

5. System (12) according to any of claims 1 to 4, further comprising a reinforcing element (42, 42'), the reinforcing element (42, 42') being more rigid than the support (10).

6. System (12) according to claims 4 and 5, wherein the reinforcing element (42, 42') comprises a plurality of projections adapted to support the plurality of apertures, wherein the projections are arranged in the gaps between the first and second wings.

7. System (12) according to any of the preceding claims, further comprising a lid (40) adapted to be sealed to the support (10).

8. Stud arrangement comprising a plurality of adhesive studs (14), each having a shank and a flange and a system (12) according to any of the preceding claims, wherein the shanks extend in the apertures (18), and wherein the flanges each have a bottom side and a top side, wherein the bottom side of the flanges is arranged facing the support.

9. Method for conveying adhesive studs (18) from a storing position to a used position comprising the steps of:
- providing a stud arrangement according to claim 8, wherein the lateral walls (20) are in the first position, such that the shank of the adhesive studs (18) are clamped, and wherein the system is provided with the support and a reinforcing element comprising a plurality of projections, the support and the reinforcing element being arranged such that both support and reinforcing element cooperate with each other;
- providing a conveyor equipment (48) comprising a hose and a nozzle adapted to receive the adhesive stud (18);
- arranging the nozzle (52) around an aperture (18) of the stud arrangement, such that the nozzle surrounds the flange of a stud and deforms the lateral walls (20) from the first to the second position by pushing the support (10) against the reinforcement element (42') ;
- vacuuming and conveying the stud through the nozzle and the hose from the support to a used position.

10. Method according to claim 9, wherein the conveyor equipment (48) comprises a stud departure sensor (54), and the method further comprises a step of detecting the presence of the adhesive stud (14) in the hose (50).

11. Method according to claim 9 or 10, wherein an airflow channel (F) projects compressed air for feeding the adhesive stud through the hose, and wherein an air flow enhancer setup is provided such that a vacuum is generated for increasing the sucking effect of the adhesive stud into the hose .

12. Method according to claims 10 and 11, wherein a variable valve (V) is provided, and wherein the airflow pressure is changed from a first pressure to a second pressure when the stud departure sensor (54) detects an adhesive stud in the hose.

13. Conveyor equipment for performing the method according to any of claims 9 to 12, comprising a hose (50) and a nozzle (52) adapted to receive an adhesive stud (14).

14. Conveyor equipment (48) according to claim 13, wherein a stud departure sensor (54) is arranged in the nozzle and/or at an extremity of the hose.

15. Conveyor equipment (48) according to claim 13 or 14, further comprising an air flow enhancer setup and a compressed air control adapted to adjust air pressure for transporting the adhesive stud through the hose and adapted to adjust vacuum intensity for vacuuming the stud inside the hose.
